# EUROPÄISCHE PATENTANMELDUNG

(11) **EP 2 216 993 A2**
(43) Veröffentlichungstag der Anmeldung: **11.08.2010**
(21) Anmeldenummer: 10001105.5
(22) Anmeldetag: 03.02.2010
(51) Int. Cl.: H04N 7/18

(54) **Vorrichtung zur Bildaufzeichnung eines Sportlers auf einer Rennstrecke**

(30) Priorität: 05.02.2009 DE 102009007639
(71) Anmelder: Wallerstorfer, Kurt, 5204 Strasswalchen (AT)
(72) Erfinder: Wallerstorfer, Kurt, 5204 Strasswalchen (AT)
(74) Vertreter: Haft, von Puttkamer, Berngruber, Karakatsanis

(57) **Zusammenfassung**

Zur Bildaufzeichnung der Fahrt eines Sportlers auf einer Rennstrecke (1) zwischen Start (2) und Ziel (3), insbesondere eines Skifahrers auf einer Skipiste, sind eine Videokamera (8), eine Bildverarbeitungseinheit (12) und ein Zentralrechner (13) vorgesehen. Die Videokamera (8) ist mit einem Antrieb um drei Achsen (9, 10) verschwenkbar ausgebildet, welcher von dem Zentralrechner (13) derart angesteuert wird, dass die Videokamera (8) den Sportler von dem Start (2) bis zum Ziel (3) erfasst. Die Bildverarbeitungseinheit (12) zur Ansteuerung der Videokamera (8) mit dem Zentralrechner (13) erfasst das dem Sportler zuzuordnende Pixelfeld auf den von der Videokamera (8) aufgenommenen Bilder.

## Beschreibung

Die Erfindung bezieht sich auf eine Vorrichtung zur Bildaufzeichnung eines Sportlers auf einer Rennstrecke zwischen Start und Ziel, Insbesondere des Rennlaufs eines Skifahrers, nach dem Oberbegriff des Anspruchs 1.

Eine derartige Vorrichtung ist aus DE 4135385 A1 bekannt. Dabei wird der Lauf eines Rennläufers mit der Videokamera zunächst von einem Kameramann aufgezeichnet, wobei die Bewegungen der Videokamera mit Fühlern erfasst und In einem Rechner abgespeichert werden. Bei einem späteren Rennlauf wird die Kamera anhand des abgespeicherten Bewegungsablaufs gesteuert. Durch Mischen der Bildsignale können beide Rennläufe übereinander dargestellt und verglichen werden.

In Wintersportgebleten ist häufig eine abgesteckte Rennstrecke an einer Skipiste mit Start und Ziel eingerichtet. Um die Zelt zu messen, die der Skifahrer für die Rennstrecke braucht, ist eine Zeitmesseinrichtung vorgesehen. Dazu weist der Start z.B. eine Startschranke auf, die ein Startsignal auslöst, während am Ziel z.B. eine Lichtschranke angebracht ist, die Ihrerseits ein Signal auslöst. Start- und Zielsignal werden der Zeitmesseinrichtung jeweils über ein Kabel zugeführt. Diese Rennstrecken werden bisher wenig genutzt.

Aufgabe der Erfindung ist es, die Attraktivität einer solchen Rennstrecke wesentlich zu erhöhen.

Dies wird erfindungsgemäß durch die Im Anspruch 1 gekennzeichnete Vorrichtung erreicht. Erfindungsgemäß sind zur Bildverarbeltung eine Bildverarbeitungseinheit und ein Zentralrechner vorgesehen, die miteinander und mit der Videokamera verbunden sind. Der Antrieb der Videokamera wird von dem Zentralrechner derart angesteuert, dass die Videokamera den Sportler vom Start bis zum Ziel erfasst. Die Bildverarbeitungseinhelt und der Zentralrechner können zusammen auch durch ein Gerät, z. B. einen PC gebildet sein.

Der Bildverarbeitungseinheit werden die Videosignale der Videokamera zugeführt und durch diese verarbeitet. Der Zentralrechner berechnet anhand der Daten der Bildverarbeitungseinheit die Position des Sportlers und steuert den Antrieb, der die Videokamera um die drei Achsen verschwenkt, und zwar derart, dass die Videokamera vom Start bis in das Ziel auf den Sportler gerichtet ist. Zur Verschwenkung um die drei Achsen kann die Videokamera z.B. an einem Kugel-oder Kreuzgelenk gelagert sein.

Mit der Bildverarbeitungseinheit wird das Pixelfeld erfasst und ausgewertet, das dem Sportler zuzuordnen ist. Dieses Pixelfeld kann durch die Farbe oder Farbauftellung des Sportlers oder dessen Kontur bestimmt werden. Ferner kann der Sportler dem Pixelfeld zugeordnet werden, welches sich gegenüber den restlichen Pixeln mit der höchsten Geschwindigkeit ändert. Auch sind Kombinationen dieser Bestimmungen zur Erfassung des Sportlers durch die Bildverarbeitungseinheit möglich.

Vorzugsweise wird eine Videokamera mit einem Zoom objektiv eingesetzt. Das Zoomobjektiv wird durch einen Antrieb betätigt, der von dem Zentralrechner gesteuert wird, und zwar derart, dass das Bild des Sportlers auf den von der Videokamera aufgezeichneten Videobildern einen vorgegebenen Bildausschnitt einnimmt. Dieser Bildausschnitt ist vorzugsweise in der Mitte der Videobilder angeordnet, wozu der Zentralrechner den Schwenkantrieb der Videokamera entsprechend steuert. Die Größe des Bildausschnitts kann beispielsweise 10 bis 30 % der Fläche des gesamten Videobildfeldes betragen. Dabei kann der Bildausschnitt am Start und/oder am Ziel auch größer als bei der übrigen Rennstrecke sein. Dazu wird das Zoom entsprechend angesteuert.

D. h. die Videokamera wird von dem Zentralrechner vorzugsweise derart angesteuert, dass das Bild des Sportlers auf den von der Videokamera aufgenommenen Videobildern einen vorgegebenen Bildausschnitt einnimmt, der während der Fahrt an ein vorgegebenes Schema angepasst wird.

Die Videokamera ist vorzugsweise im Zielbereich vorgesehen, und zwar vorzugsweise hinter dem Ziel oder in unmittelbarer Nähe des Ziels. Damit ist das Zoom am Start am größten, Insbesondere wenn am Start Videobilder aufgezeichnet werden, auf denen der Sportler einen großen Bildausschnitt einnimmt. Nach dem Start wird das Zoom allmählich reduziert, wobei am Ziel erneut stärker gezoomt werden kann, wenn, wie erwähnt, der Sportler auch am Ziel einen größeren Bildausschnitt auf den Videobildern einnehmen soll.

Es können jedoch auch zwei oder mehr zusammengeschaltete Videokameras an der Rennstrecke vorgesehen sein, z. B. eine Kamera im mittleren Teil der Rennstrecke und eine zweite am Ziel.

Um mit der Videoaufzeichnung eine dynamische Darstellung der Fahrt des Sportlers zu erreichen, kann das Zoom auch noch während der Fahrt vergrößert werden, z. B. an kritischen Stellen, etwa an einer Kante, die ein Skifahrer überfährt. Das Zoom kann also auch während der Fahrt nach einem vorgegebenen Schema geändert werden, d. h. der Bildausschnitt während der Fahrt an ein vorgegebenes Schema angepasst sein.

Wie erwähnt, ist die Videokamera vorzugsweise an der Ziellinie angeordnet. Dies gilt Insbesondere, wenn die Zelt gemäß dem Anspruch 8 gemessen wird. In diesem Fall ist die Videokamera nämlich vorzugsweise in der Verlängerung der Ziellinie am Ziel angeordnet.

Am Start und/oder am Ziel kann eine Startsignaleinrichtung bzw. eine Zielsignaleinrichtung vorgesehen sein.

Die Auslösung der Kamera beim Start des Sportlers kann beispielsweise durch eine virtuelle Startlinie erfolgen, die z.B. mit einer bestimmten Schwenkwinkelposition der Videokamera übereinstimmt. Diese Startlinie kann auf den Videobildern sichtbar gemacht werden.

Stattdessen kann am Start als Signalauslöseeinrichtung beispielsweise eine verschwenkbare Startstange oder dergleichen Schranke oder eine Drehsperre vorgesehen sein, die beim Verschwenken bzw. Drehen einen Kontakt betätigt oder eine Lichtschranke oder dergleichen optischer Sensor. Die Startsignaleinrichtung wird damit durch den Sportler betätigt, wodurch die Videokamera eingeschaltet wird, also mit der Aufzeichnung beginnt.

Die Startsignaleinrichtung kann mit der Videokamera durch Funk, beispielsweise durch WLAN verbunden sein, wie nachstehend noch näher erläutert wird.

Der Abschaltvorgang der Videokamera kann ebenfalls durch die Zielsignaleinrichtung ausgelöst werden, z.B. durch eine Lichtschranke oder dergleichen optischen Sensor. Vorzugsweise wird der Abschaltvorgang jedoch eingeleitet, wenn der Sportler eine virtuelle Ziellinie passiert hat, die z.B. durch eine bestimmte Schwenkposition der Videokamera oder durch eine softwaremäßig im Bild festgelegte virtuelle Grenzlinie oder -fläche festgelegt sein kann. Das Abschalten der Videokamera kann dann nach einer vorgegebenen Zeitspanne, beispielsweise von einigen Sekunden nach dem Passieren der Ziellinie erfolgen. Die Ziellinie kann in der Bildaufzeichnung sichtbar gemacht werden.

Die Videokamera kann ferner dann ausgeschaltet werden, also die Aufzeichnung beenden, wenn der Skifahrer die Piste verlässt. Dazu kann die Piste seitlich virtuell begrenzt werden, wobei die seitlichen Grenzen durch die Schwenkwinkelposition oder durch eine im Bild festgelegte virtuelle Grenzlinie oder -fläche der Videokamera festgelegt werden können.

Ferner kann die Videokamera abgeschaltet werden, wenn nach dem Start eine bestimmte Zeit abgelaufen ist. Zudem ist eine Abschaltung der Videokamera dann möglich, wenn die Bildverarbeitungseinheit keine eindeutige Erfassung des Sportlers garantiert, z.B. wegen einer Person, die sich dem Sportler auf der Piste während seiner Fahrt nähert.

Mit der erfindungsgemäßen Vorrichtung kann zudem die Rennzeit gemessen werden, die der Sportler für die Fahrt vom Start bis zum Ziel braucht. Dazu kann mit der Bildverarbeitungseinheit z. B. die Mitte des Körpers des Sportlers erfasst werden, wenn er die virtuelle Ziellinie oder, wenn auch am Start eine virtuelle Startlinie vorhanden ist, diese passiert.

Wenn die Videokamera mit einer Bildsequenz von z. B. 50 Bildern/Sekunde aufnimmt, kann damit eine Zeitmessung mit einer Genauigkeit von etwa 2/100 Sekunden durchgeführt werden. Diese Zeitmessung ist wesentlich günstiger als das heutige Zeitmesssystem mit einem optischen Sensor an der Ziellinie, bei dem eine gesonderte Stromversorgung, Kabel oder Funk zwischen Start und Ziel usw. erforderlich sind.

Die erfindungsgemäße Vorrichtung weist vorzugsweise eine Datenbank auf, mit der die mit der Videokamera aufgezeichnete Videobilder von der Fahrt des Sportlers auf der Rennstrecke abgespeichert werden. Die Datenbank kann beispielsweise durch einen PC gebildet werden, mit dem die Videokamera z.B. über WLAN durch Funk verbunden ist. Zugleich kann in der Datenbank die gemessene Rennzeit der Sportlers abgespeichert werden.

Vorzugsweise führt der Sportler einen Datenträger mit einer Identifikationsnummer oder dergleichen Identifikationsdaten mit sich, beispielsweise eine Barcode- oder RFID-Karte. Der Datenträger kann zugleich als Berechtigungsausweis zur Benutzung der Rennstrecke dienen.

Dazu ist im Startbereich der Rennstrecke eine Leseeinrichtung vorgesehen, mit der die Identifikationsdaten des Sportlers von dem Datenträger ausgelesen werden können. Das Auslesen des Datenträgers wird also durchgeführt, bevor der Sportler an dem Start geht.

Die Leseeinrichtung ist zur Kommunikation mit der Datenbank, also z.B. dem PC verbunden, der mit der Videokamera in Verbindung steht. Damit können die von dem Datenträger ausgelesenen Identifikationsdaten des Datenträgers des Sportlers der Bildaufzeichnung mit der Videokamera zugeordnet werden, welche die Fahrt des Sportlers auf der Rennstrecke zeigt, vorzugsweise zusammen mit der gemessenen Zeit.

Die Datenbank bzw. der PC weist vorzugsweise eine Schnittstelle zu einem Datennetzwerk auf, beispielsweise zum Internet oder einem Mobilfunknetz.

Damit kann die jeweilige Bildaufzeichnung zusammen mit der ggf. gemessenen Zeit heruntergeladen werden. Dazu kann der Datenträger zusätzlich mit visuell sichtbaren Identifikationsdaten, beispielsweise mit einer Identifikationsnummer versehen sein, sodass die Bildaufzeichnung z.B. über das Internet erst nach Eingabe der visuell sichtbaren Identifikationsdaten abrufbar ist.

Durch die Internetverbindung kann die Bildaufzeichnung auch als Video-Clip auf ein Videoportal, hochgeladen werden.

Die erfindungsgemäße Vorrichtung kann zudem eine Zugangskontrolleinrichtung zum Zutritt zum Start aufweisen, beispielsweise eine Drehsperre oder eine Ampel, die freigeschaltet bzw. von rot auf grün geschaltet wird, wenn die Leseeinrichtung eine gültige Berechtigung auf dem Datenträger ausgelesen hat. Auch ist es möglich, am Start eine Fotokamera vorzusehen, um beispielsweise ein Portraitfoto von dem Sportler am Start aufzunehmen, wobei die Fotokamera von der gleichen Einrichtung, also beispielsweise der Startstange ausgelöst werden kann, wie die Videokamera.

Bei der erfindungsgemäßen Vorrichtung ist die Zeit zwischen den Systemen, also insbesondere zwischen der Startsignaleinrichtung und der Videokamera einschl, der Bildverarbeitungseinheit und dem Zentralrechner synchronisiert.

Die erfindungsgemäße Vorrichtung ist insbesondere für Rennstrecken im alpinen Skisport bestimmt. Sie ist jedoch nicht nur zur Bildaufzeichnung der Fahrt eines Skifahrers auf einer Skipiste, sondern generell zur Bildaufzeichnung der Fahrt eines Sportlers auf einer Rennstrecke geeignet, insbesondere einer Abfahrtsrennstrecke, also beispielsweise auch für Snowboard-Fahrer, Downhill-Mountainbiker oder dergleichen. Durch die Bildverfolgung ist die erfindungsgemäße Vorrichtung aber auch geeignet, Sportler in jeder Art von Veranstaltung zu verfolgen, also beispielsweise Reiter bei einer Reitveranstaltung oder im Motorsport.

Mit der Videoaufzeichnung kann zudem eine vom Sportler gefahrene Linie entlang der Rennstrecke oder eines Teils derselben darstellbar sein. Auch ist eine Linien-Überlagerung darstellbar, z. B. die gefahrene Linie und eine Ideallinie. Diese Ideallinie kann dabei auch eine Fahrlinie eines bekannten Rennsportlers sein, so dass der Sportler seine Abweichung gegenüber dem Rennsportler sehe und beurteilen kann. Dabei kann der Vergleich eine Vielzahl von Formen annehmen, beispielsweise in Form einer anders gefärbten Linie, eines Symbols oder des elektronisch herausgeschnittenen Rennsportlers selbst. Wenn also der Sportler beispielsweise den Film Bild für Bild abspielt, kann er die Abweichung gut erkennen, da auf jedem Bild beide Sportler dargestellt sind.

Die Bewegungen des Rennläufers und damit die Bewegungen der Videokamera, also der Antrieb der Videokamera um ihre drei Achsen, werden im wesentlichen von den, Kurs der Rennstrecke bestimmt, so dass beispielsweise bei einem Slalom, der durch eine Reihe von Toren festgelegt wird, die einzelnen Sportler von diesem Kurs meistens nur geringfügig abweichen.

Demgemäß wird erfindungsgemäß vorzugsweise der von dem Zentralrechner gesteuerte Bewegungsablauf der Videokamera, zumindest teilweise von dem Kurs der Rennstrecke bestimmt, D. h. das für den Bewegungsablauf der Videokamera erforderliche Steuerprogramm, das in dem zugehörigen Speicher des Zentralrechners abgelegt ist, kann insbesondere dem Kurs der Rennstrecke entsprechen.

Da die Sportler die Rennstrecke mit unterschiedlicher Geschwindigkeit zurücklegen, wird die Geschwindigkeit des von dem Zentralrechner gesteuerten Bewegungsablaufs der Videokamera von der Geschwindigkeit der Fahrt des Sportlers bestimmt, die mit der Bildverarbeitungseinhelt erfasst wird, also beispielsweise mit welcher Geschwindigkeit das Pixelfeld, das dem Sportler zuzuordnen ist, sich gegenüber den anderen Pixeln der von der Videokamera aufgenommenen Bilder bewegt. Dabei wird natürlich auch die Vorschubgeschwindigkeit der sich bewegenden Kamera mit berücksichtigt.

Daher wird vorzugsweise die Ansteuerung aufgrund des vom Kurs bestimmten Bewegungsablaufs der Videokamera mit der Ansteuerung aufgrund des Pixelfeldes, das dem Sportler zuzuordnen ist, kombiniert, und zwar vorzugsweise mit unterschiedlicher Gewichtung. So wird dem Bewegungsablauf aufgrund des Kurses vorzugsweise eine größere Gewichtung gegeben als dem dem Sportler zuzuordnenden Pixelfeld auf den Videobildern. D. h. das Pixelfeld mit dem Sportler kann sich bei einer geringen Gewichtung des Pixelfeldes auf den Videobildern mehr oder weniger weit zur Seite oder nach oben oder nach unten bewegen.

Bei stark abweichenden Kursen kann das System auch auf direkte Personenverfolgung umstellen, da In diesem Fall klar ist, dass der Sportler den Kurs absichtlich verlassen will. In diesem Fall macht es keinen Sinn, die Historie bei der Abfahrt mit zu berücksichtigen.

Der Kurs, der den Bewegungsablauf der Videokamera bestimmt, kann statistisch ermittelt werden, beispielsweise aus der Historie, aufgrund einer Vielzahl abgespeicherter Fahrten auf der Rennstrecke. Dabei können die Sportler sich Stil und Geschwindigkeit in bestimmte Fahrklassen (z.B. "Fortgeschrittene") eingeteilt werden, um noch bessere Verfolgungsergebnisse zu erzielen.

Der Kurs wird beispielsweise täglich aufgrund der hohen Pistenbelastung mehrmals geändert. Das kann zu einer Verfälschung der Historie-Daten und damit zu einer vorübergehenden Störung der Kameraführung führen. Aus diesem Grund ist im System eine Löschkarte vorgesehen, die dem System anzeigt, dass ein neuer Kurs gesteckt wurde. Damit setzt sich der Historienspeicher zurück. Neue Abfahrten werden wieder als Basis für den Aufbau des Historienspeichers herangezogen. Durch die Steuerung des Bewegungsablaufs der Videokamera aufgrund des Kurses kann zudem die mechatronische Trägheit des Systems reduziert werden, die beispielsweise durch das Bitddecodierverfahren, die Übertragungsstrecke von der Videokamera zum Zentralrechner, die Funkstrecke, die Decodierzelt, Rechenzeit, Steuergrößenberechnung der Schwenkbewegung der Kamera, die Datenübertragung und insbesondere durch die mechanische Umsetzung hervorgerufen wird, also insbesondere die Massenträgheit der Videokamera und ihres Antriebs. Damit ist es auch möglich, die Fahrt voraus zu berechnen und damit die Kameraführung zu beaufschlagen. Dadurch behält das System trotz Trägheit den Sportler in der Bildmitte. Das wiederum ermöglicht bessere Bilder und größere Darstellungen des Sportlers ohne Risiko des Objekt-Verlustes.

Durch die Historiensteuerung ergeben sich noch weitere erfindungsgemäße Vorteile der feineren Bildführung. Nachdem der Speicher den Mittelwert mehrerer Fahrten kennt, kann die Kamera sehr ruhig geführt werden und es entsteht der Eindruck als ob ein Mensch die Kamera geführt hätte. Außerdem werden die mechanischen Komponenten entsprechend geschont und die ruckligen Bewegungen, die den Masten, der das Stativ für die Videokamera bildet, zu Schwingungen anregen (und schlechtere Bilder hervorrufen) entfallen.

Bei Bildverarbeltungssystemen kann es immer wieder zu qualitativen Bildeinschränkungen (optisches Hindernis, plötzlicher Übergang zu Schatten, Schatteneffekte aller Art, bewegte Torstangen,....) kommen, was typischerweise zu Objektverlusten führt. Da erfindungsgemäß der Kurs der Strecke und die Fahrtzeit des Fahrers (sowie seine Fahrklasse/Fahrzeit) beim Verlust bekannt ist, kann vorübergehend auf die Bildauswertung verzichtet und die Fahrt trotzdem korrekt fortgesetzt werden. Damit kann der Erkennungsalgorithmus eine bessere Stelle abwarten und wieder aufgesetzt werden. Die Bildverfolgung kann fortgesetzt werden, der Objektverlust führt zu keinem Abbruch der Aufnahme.

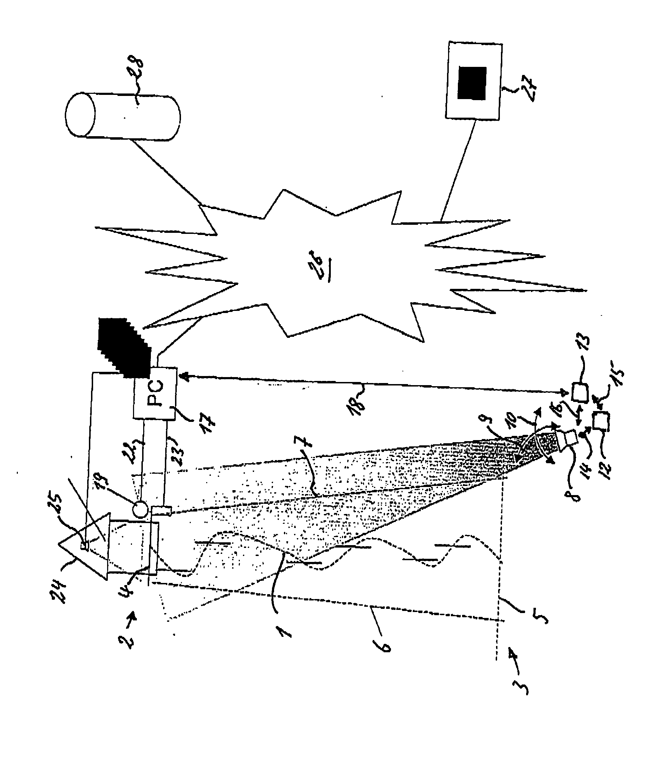

Nachstehend ist die Erfindung anhand der beigefügten Zeichnung beispielhaft näher erläutert, deren einzige Figur schematisch eine Ausführungsform der erfindungsgemäßen Vorrichtung zeigt.

Danach weist eine z.B. als Slalom ausgesteckte Rennstrecke 1 auf einer Skipiste einen Start 2 und ein Ziel 3 auf. Am Start 2 ist eine Startschranke 4 oder dergleichen vorgesehen, und am Ziel 3 die Ziellinie 5. Durch die Seitenlinien 6 und 7 wird die Rennstrecke 1 seitlich begrenzt. Die Ziellinie 5 und die Seitenlinien 6, 7 sind virtuell, wie vorstehend geschildert.

Hinter, also In Fahrtrichtung des Sportlers nach der Ziellinie 5 ist eine Videokamera 8 vorgesehen, die, wie durch die Doppelpfeile 9, 10 angedeutet, um drei Achsen verschwenkbar gelagert Ist. Die Videosignale der Videokamera 8 werden einer Bildverarbeitungseinheit 12 zugeführt. Ferner ist ein Zentralrechner 13 vorgesehen. Die Videokamera 8, die Bildverarbeitungseinheit 12 und der Zentralrechner 13 sind miteinander verknüpft, wie durch die Doppelpfeile 14, 15 und 16 veranschaulicht. Der Zentralrechner 13 ist mit einem PC 17 über Funk beispielsweise WLAN verbunden, wie durch den Doppelpfeil 18 dargestellt.

Am Start 2, und zwar bevor der Sportler zur Startschranke 4 gelangt, ist eine Leseeinrichtung 19 für einen Datenträger mit einer Zugangsberechtigung und Identifikationsdaten vorgesehen. Die Leseeinrichtung 19 ist über eine Leitung 22 mit dem PC 17 verbunden, und die Startschranke 4 mit dem PC 17 über die Leitung 23. Zusätzlich ist in einer Starthütte 24 eine mit dem PC 17 über die Leitung 20 verbundene Fotokamera 25 vorgesehen, um ein Portraitfoto von dem Sportler an der Startschranke 4 aufzunehmen.

Zur Aufzeichnung der Fahrt eines Sportlers Ober die Rennstrecke 1 wird die Videokamera 8 auf den Start 2 geschwenkt. In der Ausgangsposition der Videokamera 8, in der sie auf die Startschranke 4 gerichtet ist, ist das Zoomobjektiv der Videokamera 8 so eingestellt, dass ein Sportler einen bestimmten Bildausschnitt von beispielsweise etwa 30 % des gesamten Videobildfeldes einnimmt.

Der Sportler geht zunächst zur Leseeinrichtung 19, um den Datenträger mit der Zugangsberechtigung und den Identifikationsdaten auszulesen. Bei gültiger Berechtigung wird beispielsweise eine nicht dargestellte Ampel von rot auf grün geschaltet. Die Identifikationsdaten werden in dem PC 17 gespeichert.

Bei Verschwenken der Startschranke 4 durch den Sportler wird ein Startsignal erzeugt, durch das die Videokamera 8 eingeschaltet wird, also mit der Bildaufzeichnung beginnt. Zudem wird die Startzeit in dem PC 17 gespeichert. Gleichzeitig kann mit der Fotokamera 25 ein Portraitfoto von dem Sportler aufgenommen werden.

Durch die Bildverarbeitungseinheit 12 wird der von der Videokamera 8 aufgenommene Sportler am Start identifiziert. Die Daten der Bildverarbeitungseinheit 12 werden dem Zentralrechner 13 zugeführt, der den Schwenkantrieb der Videokamera 8 derart ansteuert, dass die Videokamera 8 dem Sportler nachfährt und zwar so, dass sich das Bild des Sportlers im mittleren Bereich der aufgezeichneten Videobilder befindet. Bei der Verfolgung des Sportlers vom Start 2 zum Ziel 3 mit der Videokamera 8 wird zugleich deren Zoomobjektiv derart angesteuert, dass eine Bildsequenz entsteht, die den Sportler gut sichtbar und möglichst lebendig zeigt.

Mit der Blidverarbeitungseinheit 12 wird die Zeit beim Passieren der Ziellinie 5 gemessen. Das Passieren der Ziellinie 5 kann jedoch auch mittels Lichtschranken realisiert werden, wobei das Signal per Kabel oder Funk an den PC 17 übertragen wird. Zugleich wird die während der Fahrt aufgezeichnete Bildsequenz auf einer Datenbank, nämlich In dem Speicher des PC 17 verspeichert, wobei der Bildsequenz die Identifikationsdaten zugeordnet werden, die vor dem Start mit der Leseeinrichtung 19 von dem Datenträger ausgelesen worden sind.

Das Video mit der gemessenen Zeit und ggf. dem Portraitfoto kann dann über das Internet 26 übertragen werden, von wo es der Nutzer z.B. mit seinem PC 27 abrufen kann. Zugleich kann er es z.B. in ein Videoportal 28 hochladen.

Statt des PC 17 können auch zwei PC's vorgesehen sein, die jewells mit dem Internet 26 kommunizieren, und zwar ein PC, der mit dem Zentralrechner 13 und der Portraitkamera 25 verbunden ist und in dem die Bildsequenzen gespeichert werden, und ein zweiter PC, der mit der Startstange 4 und der Leseelnrichtung 21 verbunden ist.

In einer Ausführungsform kann die Bildverarbeitungseinheit 12, der Zentralrechners 13 und der PC 17 durch einen PC, welcher alle Funktionen ausführt, gebildet werden.

Die Bewegungen des Rennläufers und damit der Videokamera, also der Antrieb der Videokamera um ihre drei Achsen, wird Im wesentlichen durch den Kurs der Rennstrecke 1 geprägt, der durch die Torstangen 29 festgelegt wird. Von diesem Kurs welchen die Sportler meistens nur geringfügig ab. Demgemäß wird der vom Zentralrechner 13 gesteuerte Bewegungsablauf der Videokamera 8 durch den durch die Torstangen 29 vorgegebenen Kurs der Rennstrecke 1 bestimmt, der im Speicher des Zentralrechners 13 abgelegt ist.

## Patentansprüche

1. Vorrichtung zur Bildaufzeichnung der Fahrt eines Sportlers auf einer Rennstrecke (1) zwischen Start (2) und Ziel (3), insbesondere eines Skifahrers auf einer Skipiste, mit einer Videokamera (8) welche mit einem Antrieb um drei Achsen (9, 10) verschwenkbar ausgebildet Ist, welcher mit einem Zentralrechner (13), derart angesteuert wird, dass die Videokamera (8) den Sportler vom Start (2) bis zum Ziel (3) erfasst, **dadurch gekennzeichnet, dass** zur Ansteuerung der Videokamera (8) mit dem Zentralrechner (13) eine Bildverarbeitungseinheit (12) vorgesehen ist, die das dem Sportler zuzuordnende Pixelfeld auf den von der Videokamera (8) aufgenommenen Bildern erfasst.

2. Vorrichtung nach Anspruch 1, **dadurch gekennzeichnet, dass** das dem Sportler zugeordnete Pixelfeld durch die Farbe und/oder Farbaufteilung und/oder Kontur des Sportlers und/oder **dadurch** erfasst wird, dass das Pixelfeld gegenüber den restlichen Pixeln der mit der Videokamera (12) aufgenommenen Bilder sich mit der höchsten Geschwindigkeit ändert.

3. Vorrichtung nach Anspruch 1, **dadurch gekennzeichnet, dass** die Videokamera (8) ein Zoomobjektiv mit einem Antrieb aufweist, der von dem Zentralrechner (13) derart angesteuert wird, dass das Bild des Sportlers auf den von der Videokamera (8) aufgezeichneten Videobildern einen vorgegebenen Bildausschnitt einnimmt.

4. Vorrichtung nach Anspruch 1, **dadurch gekennzeichnet, dass** die Videokamera (8) am oder hinter dem Ziel (3) angeordnet ist.

5. Vorrichtung nach einem der vorstehenden Ansprüche, **dadurch gekennzeichnet, dass** am Start (2) eine Startsignaleinrichtung (4) vorgesehen ist, die durch den Sportler betätigt wird und die Videokamera (8) zur Aufzeichnung des Sportlers auslöst.

6. Vorrichtung nach einem der vorstehenden Ansprüche, **dadurch gekennzeichnet, dass** das Ziel (2) durch eine virtuelle Ziellinie (5) gebildet wird.

7. Vorrichtung nach Anspruch 10, **dadurch gekennzeichnet, dass** die Ziellinie (5) in der Bildaufzeichnung sichtbar gemacht ist.

8. Vorrichtung nach einem der vorstehenden Ansprüche, **dadurch gekennzeichnet, dass** mit der Bildverarbeitungseinhelt (12) und dem Zentralrechner (13) die Rennzeit des Sportlers zwischen Start (2) und Ziel (3) messbar Ist.

9. Vorrichtung nach einem der vorstehenden Ansprüche, **dadurch gekennzeichnet, dass** eine Datenbank (17) vorgesehen ist, mit der die von der Videokamera (8) aufgezeichneten Videobilder von der Fahrt des Sportlers auf der Rennstrecke (1) und die ggf. zwischen Start (2) und Ziel (3) gemessene Zeit abspeicherbar sind.

10. Vorrichtung nach Anspruch 9, **dadurch gekennzeichnet, dass** eine Schnittstelle zu einem Datennetzwerk (26) vorgesehen ist.

11. Vorrichtung nach einem der vorstehenden Ansprüche, **dadurch gekennzeichnet, dass** der von dem Zentralrechner (13) gesteuerte Bewegungsablauf der Videokamera (8) von dem Kurs der Rennstrecke zumindest teilweise bestimmt wird.

12. Vorrichtung nach Anspruch 11, **dadurch gekennzeichnet, dass** die Geschwindigkeit des von dem Zentralrechner (13) gesteuerten Bewegungsablaufs der Videokamera (8) von der von der Bildverarbeitungseinheit (12) erfasste Fahrtgeschwindigkeit des Sportlers bestimmt wird.

13. Vorrichtung nach einem der vorstehenden Ansprüche, **dadurch gekennzeichnet, dass** am Start (2) eine Leseeinrichtung (19) zum Lesen eines Datenträgers vorgesehen Ist, der Identifikationsdaten aufweist.

14. Vorrichtung nach Anspruch 9 und 13, **dadurch gekennzeichnet, dass** die Leseeinrichtung (19) zur Kommunikation mit der Datenbank (17) ausgebildet ist, sodass die von dem Datenträger und der Leseeinrichtung (19) ausgelesenen Identifikationsdaten des Sportlers der Bildaufzeichnung des Sportlers mit der Videokamera (8) zugeordnet werden.
